# EUROPÄISCHE PATENTSCHRIFT

(11) **EP 1 574 264 B1**
(45) Veröffentlichungstag und Bekanntmachung des Hinweises auf die Patenterteilung: **03.09.2008**
(21) Anmeldenummer: 05004541.8
(22) Anmeldetag: 02.03.2005
(51) Int. Cl.: B05C 5/02, B29C 47/02

(54) **Verfahren und Vorrichtung zur Herstellung einer Leichtbauplatte**
Process and apparatus for manufacturing a light building panel
Procédé et appareil pour la fabrication d'un panneau de construction léger

(30) Priorität: 05.03.2004 DE 102004010873
(43) Veröffentlichungstag der Anmeldung: 14.09.2005
(73) Patentinhaber: Homag Holzbearbeitungssysteme AG, 72296 Schopfloch (DE)
(72) Erfinder: Gauss, Achim, 72280 Dornstetten Hallwangen (DE); Kalmbach, Kurt, 72275 Alpirsbach (DE); Schmid, Johannes, 72181 Starzach Wachendorf (DE)
(74) Vertreter: HOFFMANN EITLE

(56) Entgegenhaltungen:
- EP-A- 1 029 665
- EP-A- 1 159 117
- WO-A-84/04262
- FR-A- 2 362 980
- GB-A- 2 000 465
- US-A- 3 957 406
- US-A- 4 378 170

## Beschreibung

### Technisches Gebiet

Die vorliegende Erfindung betrifft ein Verfahren zur Herstellung einer Leichtblauplatte aus zwei die Plattenobersowie die Plattenunterseite bildenden dünnwandigen Decklagen und mindestens einer zwischen den Decklagen angeordneten und mit diesen verklebten Kernlage aus leichtem Füllmaterial gemäß dem Oberbegriff des Patentanspruchs 1. Ferner betrifft die Erfindung eine Vorrichtung zur Durchführung des Verfahrens.

### Stand der Technik

Leichtbauplatten der hier zur Diskussion stehenden Art werden zur Herstellung von Zimmertüren, Möbelelementen, Paneelelementen oder dergleichen eingesetzt. Die dünnwandigen Decklagen bestehen dabei meist aus einer Furnier-, Kunststoff- oder Metallplattenlage geringer Wandstärke, die auf die Außenseite einer Kernlage aus leichtem Füllmaterial aufgeklebt wird.

Unter einer derartigen Kernlage wird eine Füllmateriallage verstanden, die weitgehend aus Stegen besteht, die untereinander verbunden sind und Hohlräume verschiedenster Form einschließen. Bevorzugt sind dabei waben- oder rohrartige Strukturen, die einerseits in Verbindung mit den Decklagen zusätzliche Festigkeit verleihen, andererseits - bezogen auf das Volumen - ein extrem niedriges Gewicht besitzen.

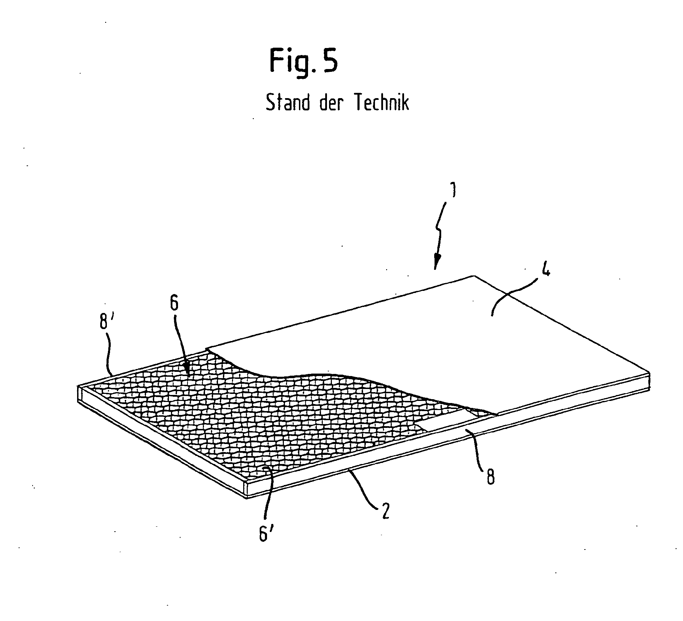

Der Aufbau einer bekannten Leichtbauplatte der eingangs genannten Art ist schematisch in Fig. 5 dargestellt. Die in Fig. 5 gezeigte Leichtbauplatte 1 umfasst eine untere Decklage 2 und eine obere Decklage 4, zwischen denen eine wabenartige Kernlage 6 vorgesehen ist. Im Randbereich der Leichtbauplatte sind zwischen den Decklagen 2, 4 Rahmenriegel 8, 8' vorgesehen. Diese bestehen meist aus Holz bzw. einem Holzmaterial und dienen dazu, der Leichtbauplatte 1 Stabilität zu verleihen und diese dicht abzuschließen.

Ein bekanntes Herstellungsverfahren für derartige Leichtbauplatten ist beispielsweise aus der EP 1 029 665 A2 bekannt. Dabei werden die dünnen Decklagen getrennt voneinander einseitig mit einer Klebstoffschicht bestrichen und im Anschluss daran die Kernlage mit ihrer einen Seite auf die Klebstoffschicht der einen Decklage aufgelegt und anschließend ebenfalls die andere Decklage mit ihrer Klebstoffschicht auf die andere Seite der Kernlage aufgelegt.

In der Praxis hat sich gezeigt, dass das Einbringen von Rahmenriegeln, beispielsweise bei dem vorstehend beschriebenen Herstellungsverfahren, einen aufwändigen Arbeitsgang darstellt, der die Komplexität des Verfahrens deutlich erhöht und eine beträchtliche Störungsquelle darstellt. Darüber hinaus müssen die Riegel für die einzelnen Leichtbauplatten jeweils auf Maß zugeschnitten sein, was die Vorhaltung einer Vielzahl unterschiedlicher Riegellängen- und querschnitte erfordert.

Ferner sind sind im Stand der Technik Verfahren und Vorrichtungen zum Auftragen fließfähiger und aushärtbarer Materialien auf plattenförmige Werkstücke bekannt, beispielsweise aus der EP 1 159 117 der Anmelderin. Allerdings wird das Material hierbei lediglich als Kantenmaterial auf die Außenseite der Werkstücke aufgetragen.

Ferner offenbart die GB 2 000 465 A ein Verfahren nach dem Oberbegriff von Anspruch 1.

### Darstellung der Erfindung

Es ist daher Aufgabe der vorliegenden Erfindung, ein Verfahren und eine Vorrichtung zur Herstellung einer Leichtbauplatte der eingangs genannten Art bereitzustellen, die eine vereinfachte Herstellung einer Leichtbauplatte mit hoher Stabilität ermöglichen.

Diese Aufgabe wird erfindungsgemäß durch ein Verfahren nach Anspruch 1 sowie eine Vorrichtung nach Anspruch 10 gelöst. Vorteilhafte Weiterbildungen der Erfindung sind in den abhängigen Ansprüchen angegeben.

Der Erfindung liegt der Gedanke zugrunde, die Herstellung des Grundkörpers der Leichtbauplatte aus Decklagen und Kernlage zeitlich und ablauftechnisch von dem Einbringen von Rahmenriegeln bzw. Verstärkungen im Randbereich der Leichtbauplatte zu entkoppeln. Zu diesem Zweck kommt im Rahmen der vorliegenden Erfindung die bisher eingesetzten, starren Rahmenriegel durch ein fließfähiges und aushärtbares Material ersetzt, das zumindest teilweise in Hohlräume der Kernlage eindringt.

Auf diese Weise kann bei der Herstellung der Leichtbauplatten auf das umständliche Einbringen starrer Rahmenriegel verzichtet werden. Hierdurch wird zunächst der Verfahrensablauf vereinfacht, während gleichzeitig die Variabilität des Verfahrens deutlich gesteigert wird. So ist es beispielsweise problemlos möglich, bestimmte plattenförmige Werkstücke großformatig vorzuproduzieren, um diese anschließend in eine individuelle und beliebige Form zuzuschneiden und abschließend im Bereich der Schmalseite mit dem fließfähigen und aushärtbaren Material zu versehen. Der sogenannte "Variantenbestimmungszeitpunkt" wird auf diese Weise weiter an das Ende der Wertschöpfungskette gelegt, was eine auftragsneutrale Fertigung ermöglicht.

Gleichzeitig eignet sich das erfindungsgemäße Verfahren zur Herstellung von Leichtbauplatten mit einer unbegrenzten Vielfalt von Formen (z. B. rund, oval, kubisch etc.) und Kantengestaltungen (Farbe, Oberfläche, Struktur etc.). Nicht zuletzt verleiht das fließfähige Material im ausgehärteten Zustand der Leichtbauplatte eine sehr hohe Steifigkeit, Formstabilität sowie Abdichtung.

Gemäß der vorliegenden Erfindung ist vorgesehen, dass das an dem Werkstück vorgesehene Material anschließend mit einer dekorativen Schicht versehen wird. Hierdurch lassen sich auf einfache Weise besondere optische Effekte erzielen, die der erfindungsgemäßen Leichtbauplatte ein hochwertiges Aussehen verleihen. Dabei erfolgt das Aufbringen der dekorativen Schicht erfindungsgemäß mittels Extrudieren oder Bedrucken.

Das Vorsehen des fließfähigen und aushärtbaren Materials auf der mindestens einen Schmalseite des plattenförmigen Werkstücks kann im Rahmen der vorliegenden Erfindung auf vielfältige Arten geschehen. In einer bevorzugten Ausführungsform der Erfindung ist jedoch vorgesehen, dass das fließfähige und aushärtbare Material mittels einer Auftrageinrichtung auf die mindestens eine Schmalseite aufgetragen wird. Hierdurch lässt sich ein kontinuierlicher und gleichmäßiger Materialstrom erzielen. Dabei ist es besonders bevorzugt, dass bei diesem Verfahrensschritt bereits ein Teil des Materials in Hohlräume der Kernlage eingebracht wird, wodurch sich das Verfahren auf einfache Weise mit einer verminderten Anzahl von Verfahrensschritten durchführen lässt.

Im Hinblick auf ein ansprechendes Erscheinungsbild, eine hohe Dauerhaftigkeit und eine gute Abdichtung der Leichtbauplatte ist gemäß einer Weiterbildung der vorliegenden Erfindung vorgesehen, dass das fließfähige und aushärtbare Material nach dem Auftragen geglättet und/oder geformt wird. Hierdurch lässt sich im Bereich der Schmalseite eine Kante mit einer Vielzahl von Formen und Kantengestaltungen bilden. Dabei kann dieser Verfahrensschritt gleichzeitig dazu genutzt werden, um das Einbringen des fließfähigen und aushärtbaren Materials in Hohlräume der Kernlage weiter zu fördern, sodass mittels eines einzigen Verfahrensschritts sowohl auf das äußere Erscheinungsbild als auch auf die innere Struktur der Leichtbauplatte eingewirkt werden kann.

Das Glätten und/oder Formen kann mit einer Vielzahl unterschiedlicher Vorrichtungen durchgeführt werden, wie beispielsweise Rollen, Gleitschuhe, Rakel und dergleichen. Eine besonders glatte und optisch ansprechende Oberfläche lässt sich jedoch im Rahmen der Erfindung erzielen, wenn das fließfähige und aushärtbare Material beim Glätten und/oder Formen zumindest abschnittsweise mit einem Unterdruck beaufschlagt wird, der das Material beispielsweise an eine Fläche zum Glätten und/oder Formen des Materials ansaugt, sodass die Fläche zum Glätten und/oder Formen ihre volle Wirkung entfaltet. Dabei ist es möglich, dass der Unterdruck auf der dem plattenförmigen Werkstück abgewandten Seite des Materials, d.h. der Außenseite der Leichtbauplatte wirkt.

Obgleich das aushärtbare Material im Rahmen der vorliegenden Erfindung auch selbsttätig aushärten kann, ist gemäß einer Weiterbildung der vorliegenden Erfindung vorgesehen, dass das fließfähige und aushärtbare Material nach dessen Vorsehen einer Aushärtungsbehandlung unterworfen wird. Hierdurch wird nicht nur der Verfahrensablauf beschleunigt, sondern es kann auch die Qualität wie beispielsweise die Festigkeit oder das Erscheinungsbild des Materials durch das Durchführen einer gezielten Aushärtungsbehandlung verbessert werden.

Insbesondere bei Kunststoffmaterialien, die im heißen oder warmen Zustand aufgebracht werden, umfasst die Aushärtungsbehandlung eine Kühlung des Materials, obgleich die vorliegende Erfindung hierauf nicht beschränkt ist.

Um einen besonders zügigen Verfahrensablauf zu gewährleisten und die Anzahl von Verfahrensschritten und entsprechenden Vorrichtungsteilen zu vermindern, ist gemäß einer Weiterbildung der vorliegenden Erfindung vorgesehen, dass die Aushärtungsbehandlung im Wesentlichen gleichzeitig mit dem Glätten und/oder Formen des fließfähigen und aushärtbaren Materials durchgeführt wird. "Im Wesentlichen gleichzeitig" bedeutet in diesem Zusammenhang, dass die Aushärtungsbehandlung bereits während des Glättens und/oder des Formens des Materials begonnen werden kann oder zumindest unmittelbar danach beginnt.

Das fließfähige und aushärtbare Material kann im Rahmen der vorliegenden Erfindung derart vorgesehen sein, dass es im Wesentlichen bündig mit den benachbarten Rändern der Decklagen der Leichtbauplatte ist und somit einen Teil der inneren Struktur der Leichtbauplatte bildet. Diese Ausführungsform der Erfindung ist besonders geeignet, wenn die entsprechende Schmalseite der Leichtbauplatte eine möglichst große Vielzahl nachträglicher Kantenbeschichtungen und/oder Kantenbearbeitungen ermöglichen soll. Hinsichtlich einer wirtschaftlichen, schnellen und einfachen Herstellung einer hochwertigen Leichtbauplatte ist gemäß einer Weiterbildung der vorliegenden Erfindung jedoch vorgesehen, dass das fließfähige und aushärtbare Material nach dessen Vorsehen über die benachbarten Ränder der Decklagen hervorsteht und eine Kante bildet. Auf diese Weise wird durch das erfindungsgemäße Verfahren mittels einer minimalen Anzahl von Verfahrensschritten eine Leichtbauplatte bereitgestellt, die bereits alle wesentlichen Elemente enthält.

Die leichtgewichtige Kernlage des plattenförmigen Werkstücks kann im Rahmen der vorliegenden Erfindung eine beliebige Form besitzen, solange sie zumindest abschnittsweise Hohlräume besitzt, die im Bereich einer Schmalseite des Werkstücks vorgesehen sind. Für Leichtbauplatten haben sich jedoch leichtgewichtige Kernlagen als besonders vorteilhaft erwiesen, die wabenartig und/oder wellstegartig ausgebildet sind. Dabei ist es besonders bevorzugt, dass sich die Hohlräume der Kernlage zwischen den benachbarten Decklagen erstrecken. Auf diese Weise lässt sich durch Einbringen des fließfähigen und aushärtbaren Materials eine Verbindung zwischen den benachbarten Decklagen der Leichtbauplatte erzielen. Ferner ist zu beachten, dass die Kernlage aus einem beliebigen leichtgewichtigen Material bestehen kann, wie beispielsweise Papier, Kunststoff, Leichtmetall oder dergleichen. Ebenso ist das für die Decklagen des plattenförmigen Werkstücks verwendete Material nicht besonders beschränkt und kann beispielsweise Holzwerkstoffe, Kunststoffwerkstoffe, (Leicht-)Metallwerkstoffe oder verschiedene Verbundwerkstoffe umfassen. Dabei ist es ebenso möglich, dass die Decklagen und die Kernlage aus demselben Material bestehen und auch integral ausgebildet sein können.

Die Durchführung des erfindungsgemäßen Verfahrens kann sowohl stationär als auch im Durchlauf erfolgen. Hinsichtlich eines kontinuierlichen Verfahrensablaufs und eines hohen Durchsatzes ist gemäß einer Weiterbildung der Erfindung jedoch vorgesehen, dass das Werkstück während des Verfahrensablaufes bewegt wird, und insbesondere eine Translation und/oder Rotation ausführt.

Darüber hinaus stellt die vorliegende Erfindung eine Vorrichtung zur Durchführung des erfindungsgemäßen Verfahrens mit den Merkmalen von Anspruch 12 bereit. Die erfindungsgemäße Vorrichtung besitzt einen einfachen Aufbau und ermöglicht eine einfache Herstellung einer Leichtbauplatte bzw. eine problemlose Durchführung des erfindungsgemäßen Verfahrens. Insbesondere erfordert die erfindungsgemäße Vorrichtung keinerlei Bauteile zur Zurichtung, Zuführung, Halterung oder Verbindung von Rahmenriegeln oder dergleichen, sondern beschränkt sich in ihrer allgemeinsten Form auf eine Auftrageinrichtung zum Auftragen des schließfähigen und aushärtbaren Materials sowie eine Einrichtung zum Glätten und/oder Formen desselben.

Um die Variabilität der erfindungsgemäßen Vorrichtung bzw. der mit dieser herstellbaren Leichtbauplatten zu erhöhen, ist gemäß der Erfindung vorgesehen, dass die Vorrichtung ferner zumindest eine Einrichtung zum Aufbringen einer dekorativen Schicht auf das von der ersten Auftragseinrichtung aufgetragene fließfähige und aushärtbare Material aufweist. Bei dieser Einrichtung kann es sich, wie bereits im Zusammenhang mit dem entsprechenden Verfahrensschritt erwähnt, um eine beliebige Einrichtung handeln, wie beispielsweise eine Kantenanleimmaschine, einen Extruder, eine Druckvorrichtung, oder dergleichen. Einen besonders einfachen und konsistenten Gesamtaufbau erhält man gemäß einer Weiterbildung der Erfindung dadurch, dass die Einrichtung zum Aufbringen einer dekorativen Schicht durch eine zweite Auftrageinrichtung zum Auftragen eines fließfähigen und aushärtbaren Materials gebildet ist. In diesem Falle ist erfindungsgemäß vorgesehen, dass die Einrichtung ferner zumindest eine zweite Einrichtung zum Glätten und/oder Formen des von der zweiten Auftrageinrichtung aufgetragenen, fließfähigen und aushärtbaren Materials aufweist. Auf diese Weise lassen sich mittels der erfindungsgemäßen Vorrichtung zwei gleichartige, hintereinandergeschaltete Bearbeitungsvorgänge ausführen, wobei der erste Bearbeitungsvorgang primär darauf gerichtet ist, das fließfähige und aushärtbare Material zumindest teilweise in das Innere der Leichtbauplatte einzubringen, während der zweite Schritt primär dazu dient, der Schmalseite der Leichtbauplatte eine dauerhafte und optisch ansprechende Kante zu verleihen. Es ist jedoch zu beachten, dass diese zwei Arbeitsschritte im Rahmen der vorliegenden Erfindung auch mittels einer einzigen Auftrageinrichtung bzw. Einrichtung zum Glätten und/oder Formen des Materials durchgeführt werden kann.

Darüber hinaus kann die Vorrichtung ferner zumindest eine Unterdruckeinrichtung zur Erzeugung eines auf das aufgebrachte, fließfähige und aushärtbare Material wirkenden Unterdrucks aufweisen. Mittels diese Unterdrucks lässt sich eine besonders glatte und ansprechende Oberfläche des Materials erzeugen. Dabei ist es möglich, dass die Unterdruckeinrichtung mit der mindestens einen, ersten und/oder zweiten Einrichtung zum Glätten und/oder Formen integriert ist, wodurch sich eine kompakte und einfache Konstruktion der Vorrichtung ergibt.

Schließlich umfasst die erfindungsgemäße Vorrichtung in einer weiteren Ausführungsform eine Kühleinrichtung zur Kühlung des aufgebrachten, fließfähigen und aushärtbaren Materials. Auf diese Weise lässt sich der Verfahrensablauf in der Vorrichtung sowohl zeitlich als auch hinsichtlich der gewünschten Eigenschaften des ausgehärteten Materials gezielt steuern. Dabei ist es besonders bevorzugt, dass die Kühleinrichtung mit der mindestens einen, ersten und/oder zweiten Einrichtung zum Glätten und/oder Formen integriert ist, wodurch sich eine Höchstmaß an Kompaktheit und Einfachheit der Vorrichtung ergibt.

Die erste und/oder zweite Auftrageinrichtung kann im Rahmen der vorliegenden Erfindung durch eine Vielzahl unterschiedlicher Bauelemente gebildet sein. Hinsichtlich eines variablen und doch kontinuierlichen Zuführens des fließfähigen und aushärtbaren Materials ist gemäß einer Weiterbildung jedoch vorgesehen, dass die Auftrageinrichtung durch einen Extruder gebildet ist.

Ebenso kann das fließfähige und aushärtbare Material selbst durch eine Vielzahl verschiedenartigster Stoffe gebildet sein, wobei spritzbare Stoffe bevorzugt sind. Hierfür kommen in erster Linie Kunststoffe, aber auch verschiedene Mischwerkstoffe, Holzextrusionswerkstoffe und auch Metalle infrage. Dabei können eingesetzte Kunststoffe beispielsweise auch Holzwerkstoffe, Kunststoffreste oder dergleichen umfassen, wobei die vorliegende Erfindung hierauf nicht beschränkt ist.

### Kurze Bezeichnung der Zeichnungen

- Fig. 1: zeigt eine schematische Draufsicht einer ersten Ausführungsform der erfindungsgemäßen Vorrichtung;
- Fig. 2: zeigt eine schematische Draufsicht einer zweiten Ausführungsform der erfindungsgemäßen Vorrichtung;
- Fig. 3: zeigt eine schematische Draufsicht einer dritten Ausführungsform der erfindungsgemäßen Vorrichtung;
- Fig. 4: zeigt eine schematische Draufsicht einer vierten Ausführungsform der erfindungsgemäßen Vorrichtung;
- Fig. 5: zeigt eine schematische, teilweise geschnittene Perspektivansicht einer Leichtbauplatte gemäß dem Stand der Technik.

### Ausführliche Beschreibung bevorzugter Ausführungsformen

Bevorzugte Ausführungsformen der Erfindung werden nachfolgende ausführlich unter Bezugnahme auf die begleitenden Zeichnungen beschrieben.

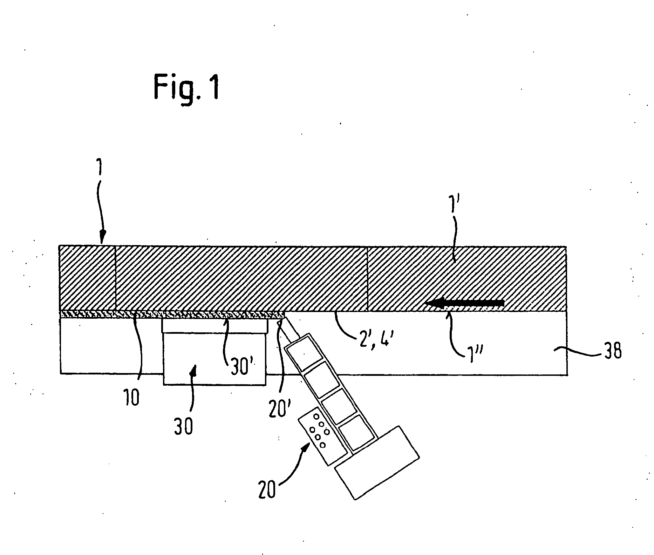

Fig. 1 zeigt eine schematische Draufsicht einer ersten bevorzugten Ausführungsform der erfindungsgemäßen Vorrichtung zur Herstelldung einer Leichtbauplatte 1 ausgehend von einem plattenförmigen Werkstück 1', das später noch genauer beschrieben wird.

Die erfindungsgemäße Vorrichtung umfasst eine Fördereinrichtung 38, auf der zu bearbeitende, plattenförmige Werkstücke 1' gefördert werden. Entlang der Fördereinrichtung 38 befindet sich zunächst eine erste Auftrageinrichtung 20 zum Auftragen eines fließfähigen und aushärtbaren Materials 10 auf eine Schmalseite des Werkstücks 1'. Bei dieser Auftrageinrichtung 20 handelt es sich in der vorliegenden Ausführungsform um einen Extruder, der ein Kunststoffmaterial als fließfähiges und aushärtbares Material 10 in Strangform ausgibt. Der Extruder 20 ist derart positioniert, dass er das Material 10 an eine zugewandte Schmalseite 1'' eines zu bearbeitenden Werkstücks 1' abgeben kann, wobei die Ausgabeöffnung des Extruders bündig zu der Schmalseite 1'' sein kann oder von dieser um einen gewünschten Abstand beabstandet sein kann.

Darüber hinaus umfasst die erfindungsgemäße Vorrichtung eine erste Einrichtung 30 zum Glätten und Formen des von der ersten Auftrageinrichtung 20 aufgetragenen, fließfähigen und aushärtbaren Materials 10. Die erste Einrichtung 30 umfasst in der vorliegenden Ausführungsform einen Gleitschuh, der bündig mit der zugewandten Schmalseite 1'' des jeweiligen Werkstücks 1' vorgesehen sein kann oder von dieser um einen bestimmten Abstand beabstandet sein kann, wobei dieser Abstand dann der Dicke einer an dem Werkstück 1' durch das Material 10 gebildeten Kante entspricht. Die erste Einrichtung 30 zum Glätten und Formen des Materials 10 umfasst ferner, obgleich in Fig. 1 nicht ausdrücklich gezeigt, eine Unterdruckeinrichtung zur Erzeugung eines auf das aufgebrachte Material 10 wirkenden Unterdrucks. Dieser Unterdruck wirkt derart, dass er das Material 10 an eine Glättungsfläche 30' der Einrichtung 30 ansaugt, sodass dem Material 10 eine besonders glatte Oberfläche verliehen werden kann.

Weiterhin umfasst die Einrichtung 30, obgleich in den Figuren ebenfalls nicht ausdrücklich gezeigt, eine Kühleinrichtung, um das aufgebrachte Material 10 im Wesentlichen gleichzeitig mit dem Glätten und/oder Formen einer Aushärtungsbehandlung zu unterziehen.

Die zu bearbeitenden, plattenförmigen Werkstücke 1' können beispielsweise den in Fig. 5 schematisch dargestellten Aufbau besitzen und umfassen dementsprechend zwei dünnwandige Decklagen 2, 4, zwischen denen eine leichtgewichtige Kernlage 6 angeordnet ist. Die leichtgewichtige Kernlage 6 besitzt in der vorliegenden Ausführungsform eine wabenartige oder wellstegartige Struktur mit Hohlräumen 6', die sich zwischen den Decklagen 2, 4 erstrecken. Im Unterschied zu dem in Fig. 5 gezeigten Werkstück umfassen die Werkstücke 1' gemäß der vorliegenden Erfindung jedoch keine Rahmenriegel 8, 8', sondern weisen im Bereich der Schmalseiten eine nach außen hin offene, mit Hohlräumen versehene Struktur auf, die durch die Kernlage 6 definiert sind.

Nachfolgend wird der Betrieb der erfindungsgemäßen Vorrichtung beschrieben. Die zu bearbeitenden Werkstücke 1' werden mittels der Fördereinrichtung 38 nacheinander in einer durch einen Pfeil in Fig. 1 gekennzeichneten Förderrichtung transportiert. Dabei sind die zu bearbeitenden Schmalseiten 1'' dem Extruder 20 und der Einrichtung 30 zum Glätten und Formen zugewandt. In der vorliegenden Ausführungsform ist die Ausgangsöffnung des Extruders 20 ebenso wie die Glättungsfläche 30' der Einrichtung 30 von der Schmalfläche 1'' der Werkstücke 1' um einen Abstand beabstandet, der beispielsweise einige Millimeter betragen kann. Beim Passieren der Austrittsöffnung 20' wird das von der Austrittsöffnung 20' des Extruders 20 austretende, fließfähige und aushärtbare Material 10 auf die zugewandte Schmalseite 1'' des plattenförmigen Werkstücks 1' aufgebracht. Dabei dringt das fließfähige Material 10 sowohl aufgrund seiner fließfähigen Eigenschaften als auch aufgrund der Ausrichtung der Austrittsöffnung 20' des Extruders 20 über die Schmalfläche 1'' in Hohlräume der leichtgewichtigen Kernlage 6 des Werkstücks 1' ein.

Darüber hinaus steht jedoch auch ein Teil des aufgebrachten Materials 10 über die Schmalseite 1'' hervor, und dieses überstehende Material 10 wird anschließend durch die Einrichtung 30 zum Glätten und Formen des Materials 10 geglättet. Bei diesem Glättungsvorgang wird das Material 10, soweit es die Hohlräume der Kernlage 6 zulassen, weiter in die Hohlräume der Kernlage 6 hineingedrückt. Gleichzeitig ergibt sich eine glatte und geformte Kante an dem entstehenden Werkstück 1. Ferner wird simultan zu dem Glätten des aufgebrachten Materials ein Unterdruck auf das Material 10 aufgebracht, welcher dieses an die Glättungsfläche 30' ansaugt, und es wird ebenfalls simultan eine Aushärtungsbehandlung des Materials 10 durch die Kühleinrichtung der Einrichtung 30 vorgenommen. Nach dem Passieren der Vorrichtung 30 ist die Herstellung des Werkstücks 1 abgeschlossen.

Die Tiefe, um welche das fließfähige Material in die zugewandte Schmalseite 1'' des plattenförmigen Werkstücks 1' eindringt, hängt primär von der Hohlraumgeometrie der leichtgewichtigen Kernlage und der Menge sowie den Eigenschaften des aufgebrachten, fließfähigen und aushärtbaren Materials 10 ab. Diese Parameter werden in Abhängigkeit von den jeweiligen Anforderungen gewählt, welche an die Leichtbauplatte gestellt werden, wie beispielsweise Stabilität, Gewicht, Dichtheit, Erscheinungsbild etc.. In vielen Anwendungsfällen wird die Eindringtiefe des Materials 10 in das Werkstück 1' im Bereich von einigen Millimetern bis einigen Zentimetern liegen, obgleich die vorliegende Erfindung hierauf nicht beschränkt ist.

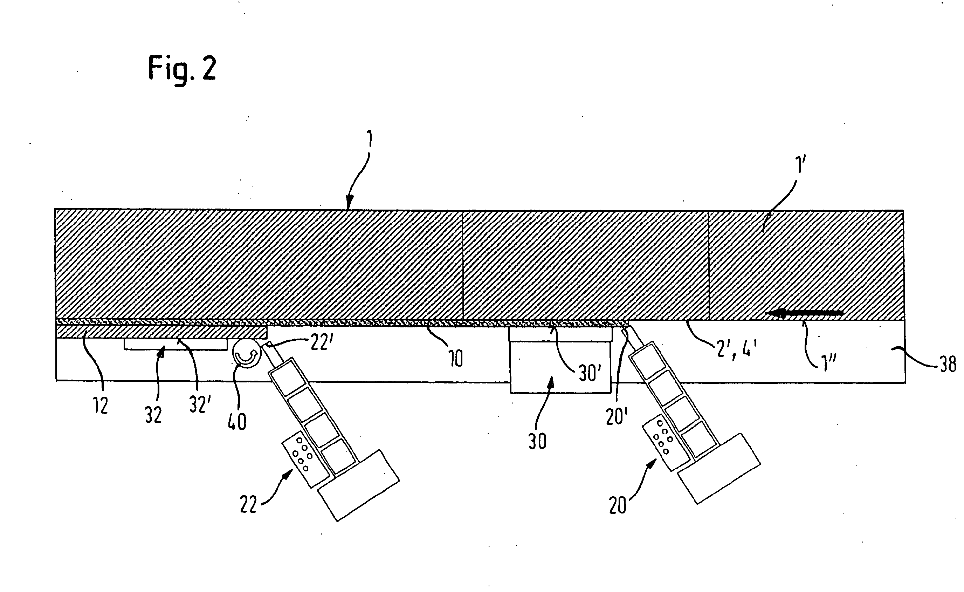

Fig. 2 zeigt eine zweite bevorzugte Ausführungsform der erfindungsgemäßen Vorrichtung, die sich von der in Fig. 1 gezeigten, ersten Ausführungsform durch zusätzliche Bauteile unterscheidet, die links in Fig. 2 gezeigt sind. Genauer gesagt umfasst die in Fig. 2 gezeigte Ausführungsform zusätzlich eine Einrichtung 22 zum Aufbringen einer dekorativen Schicht 12 auf das von der ersten Auftrageinrichtung 20 aufgetragene, fließfähige und aushärtbare Material 10. Obgleich es sich bei der Einrichtung 22 um eine beliebige Einrichtung handeln kann, beispielsweise auch um eine herkömmliche Kantenanleimvorrichtung, ist es im Rahmen der vorliegenden Erfindung bevorzugt, dass es sich bei der Einrichtung 22 ebenfalls um einen Extruder handelt, der eine Ausgangsöffnung 22' besitzt. Dem Extruder 22 nachgeschaltet ist eine Formrolle 40, mit der ein aufgetragenes Material 12 in eine beliebige Form gebracht werden kann. Darüber hinaus ist eine Einrichtung 32 vorgesehen, mittels der, ähnlich wie bei der zuvor beschriebenen Einrichtung 30, eine Aushärtungsbehandlung des aufgebrachten Materials 12 vorgenommen werden kann. Im Übrigen entspricht die Arbeitsweise der in Fig. 2 gezeigten Ausführungsform im Wesentlichen derjenigen der Ausführungsform gemäß Fig. 1.

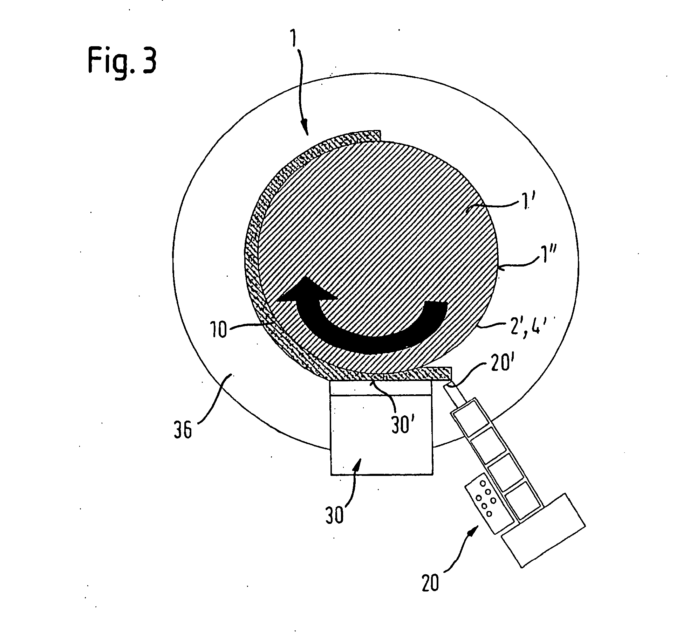

Fig. 3 zeigt schematisch eine dritte bevorzugte Ausführungsform der erfindungsgemäßen Vorrichtung, die sich von den vorigen Ausführungsformen primär dadurch unterscheidet, dass das Werkstück 1' nicht linear entlang einer Fördereinrichtung 38 transportiert wird, sondern während der Bearbeitung mittels eines Drehtisches 36 rotiert wird. Im Übrigen entsprechen die in Fig. 3 gezeigten Bauteile denjenigen aus Fig. 1.

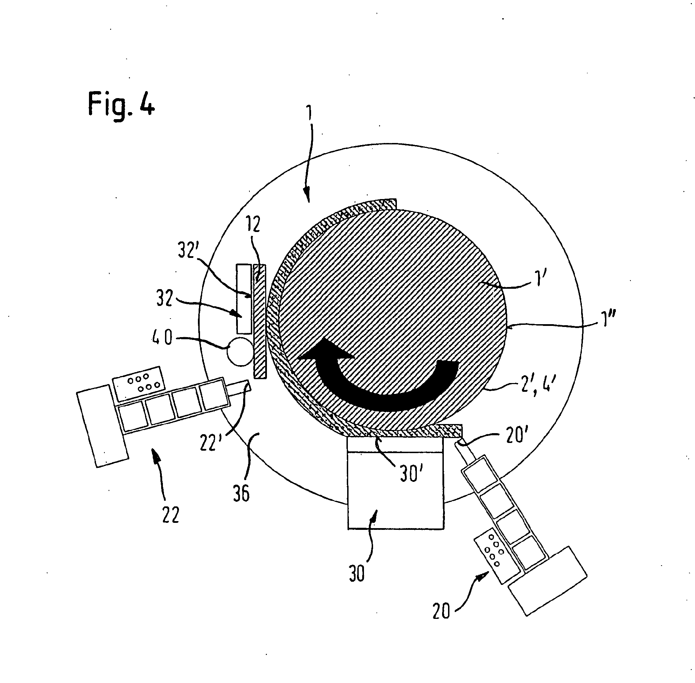

Eine Weiterbildung des in Fig. 3 gezeigten Konzepts ist in Fig. 4 als vierte Ausführungsform der vorliegenden Erfindung dargestellt. Die in Fig. 4 gezeigte Ausführungsform ist, analog zu der in Fig. 2 gezeigten Ausführungsform, vorteilhaft durch eine zweite Auftrageinrichtung 22 zum Auftragen eines fließfähigen und aushärtbaren Materials 12 ergänzt. Abgesehen davon, dass das Werkstück in Fig. 4 in Pfeilrichtung rotiert wird, entspricht der Betrieb der in Fig. 4 gezeigten Vorrichtung derjenigen aus Fig. 2.

## Patentansprüche

1. Verfahren zur Herstellung einer Leichtbauplatte (1), mit den Schritten:
Bereitstellen eines plattenförmigen Werkstücks (1'), das zwei dünnwandige Decklagen (2, 4) und mindestens eine zwischen den Decklagen angeordnete, leichtgewichtige Kernlage (6) aufweist, wobei die Kernlage zumindest abschnittsweise Hohlräume (6') besitzt;
Vorsehen eines fließfähigen und aushärtbaren Materials (10) auf mindestens einer Schmalseite (1'') des plattenförmigen Werkstücks (1') derart, dass das fließfähige und aushärtbare Material zumindest teilweise in Hohlräume der Kernlage eindringt,
**dadurch gekennzeichnet, dass** das an dem Werkstück (1') vorgesehene Material anschließend mit einer dekorativen Schicht (12) versehen wird, die durch Extrudieren oder Bedrucken aufgebracht wird.

2. Verfahren nach Anspruch 1, bei welchem das fließfähige und aushärtbare Material (10) mittels einer Auftrageinrichtung (20) auf die mindestens eine Schmalseite (1'') aufgetragen wird und dabei bevorzugt bereits ein Teil des Materials (10) in Hohlräume der Kernlage (6) eingebracht wird.

3. Verfahren nach Anspruch 2, bei welchem das fließfähige und aushärtbare Material (10) nach dem Auftragen geglättet und/oder geformt wird und hierbei bevorzugt weiter in Hohlräume der Kernlage (6) eingebracht wird.

4. Verfahren nach einem der vorhergehenden Ansprüche, bei welchem das fließfähige und aushärtbare Material (10) nach dessen Vorsehen einer Aushärtungsbehandlung, insbesondere einer Kühlung, unterworfen wird.

5. Verfahren nach einem der vorhergehenden Ansprüche, bei welchem die Aushärtungsbehandlung im wesentlichen gleichzeitig mit dem Glätten und/oder Formen des fließfähigen und aushärtbaren Materials (10) durchgeführt wird.

6. Verfahren nach einem der vorhergehenden Ansprüche, bei welchem das fließfähige und aushärtbare Material (10) nach dessen Vorsehen im wesentlichen bündig mit den benachbarten Rändern (2', 4') der Decklagen ist.

7. Verfahren nach einem der Ansprüche 1 bis 5, bei welchem das fließfähige und aushärtbare Material (10) nach dessen Vorsehen über die benachbarten Ränder (2', 4') der Decklagen (2, 4) hervorsteht und eine Kante bildet.

8. Verfahren nach einem der vorhergehenden Ansprüche, bei welchem die leichtgewichtige Kernlage (6) wabenartig und/oder wellstegartig oder dergleichen ausgebildet ist und bevorzugt Hohlräume (6') besitzt, die sich zwischen den benachbarten Decklagen (2, 4) erstrecken.

9. Verfahren nach einem der vorhergehenden Ansprüche, bei welchem das Werkstück (1') während des Verfahrensablaufs bewegt wird, und insbesondere eine Translation und/oder Rotation ausführt.

10. Vorrichtung zur Durchführung des Verfahrens nach einem der vorhergehenden Ansprüche, mit:
zumindest einer ersten Auftrageinrichtung (20) zum Auftragen eines fließfähigen und aushärtbaren Materials (10), und
zumindest einer ersten Einrichtung (30) zum Glätten und/oder Formen des von der ersten Auftrageinrichtung (20) aufgetragenen, fließfähigen und aushärtbaren Materials (10),
**dadurch gekennzeichnet, dass** sie ferner zumindest eine Einrichtung (22) zum Aufbringen einer dekorativen Schicht (12) auf das von der ersten Auftrageinrichtung (20) aufgetragene fließfähige und aushärtbare Material (10) aufweist, wobei
die Einrichtung (22) zum Aufbringen einer dekorativen Schicht (12) durch eine zweite Auftrageinrichtung (22) zum Auftragen eines fließfähigen und aushärtbaren Materials (12) oder eine Bedruckungseinrichtung gebildet ist.

11. Vorrichtung nach Anspruch 10, die ferner zumindest eine zweite Einrichtung (32) zum Glätten und/oder Formen des von der zweiten Auftrageinrichtung (22) aufgetragenen, fließfähigen und aushärtbaren Materials (12) aufweist.

12. Vorrichtung nach einem der Ansprüche 10 bis 11, die ferner zumindest eine Kühleinrichtung zur Kühlung des aufgebrachten, fließfähige und aushärtbare Materials aufweist, die bevorzugt mit der mindestens einen, ersten (30) und/oder zweiten (32) Einrichtung zum Glätten und/oder Formen integriert ist.

13. Vorrichtung nach einem der Ansprüche 10 bis 12, wobei die mindestens eine, erste (20) und/oder zweite (22) Auftrageinrichtung durch einen Extruder gebildet ist.

14. Verfahren oder Vorrichtung nach einem der vorhergehenden Ansprüche, **dadurch gekennzeichnet, dass** das fließfähige und aushärtbare Material (10, 12) eines oder mehrere Materialen aus der Gruppe bestehend aus Kunststoffmaterial, Kunststoffmischmaterial, Holzextrusionsmaterial und Metallmaterial aufweist und bevorzugt spritzbar ist.

## Claims

1. Method for the manufacture of a lightweight building board (1), with the steps of:
providing a board-like work piece (1') which has two thin-walled covering layers (2, 4) and at least one lightweight core layer (6) arranged between the covering layers, the core layer having cavities (6') at least in sections;
providing a free-flowing and hardenable material (10) on at least one narrow side (1'') of the board-like work piece (1') in such a way that the free-flowing and hardenable material at least partially enters into cavities of the core layer,
**characterised in that** the material provided on the work piece (1') is then provided with a decorative coat (12) which is applied by extrusion or printing.

2. Method according to claim 1, in which the free-flowing and hardenable material (10) is applied by means of an applicator (20) to the at least one narrow side (1'') and in the process preferably already a portion of the material (10) is introduced into cavities of the core layer (6).

3. Method according to claim 2, in which the free-flowing and hardenable material (10) is smoothed and/or shaped after application and in the process preferably further introduced into cavities of the core layer (6).

4. Method according to any of the preceding claims, in which the free-flowing and hardenable material (10) after provision thereof is subjected to a hardening treatment, in particular cooling.

5. Method according to any of the preceding claims, in which the hardening treatment is carried out substantially simultaneously with smoothing and/or shaping of the free-flowing and hardenable material (10).

6. Method according to any of the preceding claims, in which the free-flowing and hardenable material (10) after provision thereof is substantially flush with the adjacent edges (2', 4') of the covering layers.

7. Method according to any of claims 1 to 5, in which the free-flowing and hardenable material (10) after provision thereof projects beyond the adjacent edges (2', 4') of the covering layers (2, 4) and forms an edge.

8. Method according to any of the preceding claims, in which the lightweight core layer (6) has a honeycomblike and/or corrugated web-like or the like structure and preferably has cavities (6') which extend between the adjacent covering layers (2, 4).

9. Method according to any of the preceding claims, in which the work piece (1') is moved during the process and in particular performs translation and/or rotation.

10. Apparatus for carrying out the method according to any of the preceding claims, having:
at least one first applicator (20) for applying a free-flowing and hardenable material (10), and
at least one first device (30) for smoothing and/or shaping the free-flowing and hardenable material (10) applied by the first applicator (20),
**characterised in that** it further has at least one device (22) for applying a decorative coat (12) to the free-flowing and hardenable material (10) applied by the first applicator (20),
the device (22) for applying a decorative coat (12) being formed by a second applicator (22) for applying a free-flowing and hardenable material (12) or a printing device.

11. Apparatus according to claim 10, which further has at least one second device (32) for smoothing and/or shaping the free-flowing and hardenable material (12) applied by the second applicator (22).

12. Apparatus according to either of claims 10 to 11, which further has at least one cooling device for cooling the applied free-flowing and hardenable material, which is preferably integrated with the at least one first (30) and/or second (32) device for smoothing and/or shaping.

13. Apparatus according to any of claims 10 to 12, the at least one first (20) and/or second (22) applicator being formed by an extruder.

14. Method or apparatus according to any of the preceding claims, **characterised in that** the free-flowing and hardenable material (10, 12) has one or more materials from the group consisting of plastic material, plastic mixed material, wood extrusion material and metal material and is preferably extrudable.

## Revendications

1. Procédé de fabrication d'un panneau de construction léger (1), comprenant les étapes consistant à :
fournir une pièce d'oeuvre (1') en forme de plaque, présentant deux couches de couverture (2, 4) à paroi mince, et au moins une couche de noyau (6) de faible poids, disposée entre les couches de couverture, la couche de noyau comprenant, au moins par tronçons, des espaces creux (6') ;
prévoir un matériau (10), fluide et durcissable, sur au moins un côté étroit (1") de la pièce d'oeuvre (1') en forme de plaque, de manière que le matériau fluide et durcissable pénètre, au moins partiellement, dans des espaces creux de la couche de noyau,
**caractérisé en ce que** le matériau prévu sur la pièce d'oeuvre (1') est ensuite muni d'une couche (12) décorative, appliquée par extrusion on impression.

2. Procédé selon la revendication 1, pour lequel le matériau (10), fluide et durcissable, est appliqué, au moyen d'un dispositif applicateur (20) sur le au moins un côté étroit (1"), et alors de préférence déjà une partie du matériau (10) est introduite dans des espaces creux de la couche de noyau (6).

3. Procédé selon la revendication 2, pour lequel le matériau (10), fluide et durcissable, après application, est lissé et/ou formé et, ainsi, de préférence, est introduit à un plus fort degré dans des espaces creux de la couche de noyau (6).

4. Procédé selon l'une des revendications précédentes, pour lequel le matériau (10), fluide et durcissable, après sa fourniture, est soumis à un traitement de durcissement, en particulier à un refroidissement.

5. Procédé selon l'une des revendications précédentes, pour lequel le traitement de durcissement est effectué sensiblement simultanément au lissage et/ou au formage du matériau (10), fluide et durcissable.

6. Procédé selon l'une des revendications précédentes, pour lequel le matériau (10), fluide et durcissable, après sa fourniture, est sensiblement en affleurement avec les bords (2', 4') voisins des couches de couvertures.

7. Procédé selon l'une des revendications 1 à 5, pour lequel le matériau (10), fluide et durcissable, après sa fourniture, ressort des bords (2', 4') voisins des couches de couvertures (2, 4) et forme une arête.

8. Procédé selon l'une des revendications précédentes, pour lequel la couche de noyau (6) de faible poids est du genre de nids d'abeilles et/ou est réalisé avec des nervures ondulées ou analogue, et comprend de préférence des espaces creux (6), s'étendant entre les couches de couvertures (2, 4) voisines.

9. Procédé selon l'une des revendications précédentes, pour lequel la pièce d'oeuvre (1') est déplacée pendant le déroulement du procédé, et effectue en particulier une translation et/ou une rotation.

10. Dispositif pour la mise en oeuvre du procédé selon l'une des revendications précédentes, comprenant :
au moins un premier dispositif applicateur (20), pour appliquer un matériau (10), fluide et durcissable, et
au moins un premier dispositif (30), pour lisser et/ou former le matériau (10), fluide et durcissable, appliqué par le premier dispositif applicateur (20),
**caractérisé en ce qu'**il présente en outre au moins un dispositif (22), pour appliquer une couche (12) décorative, sur le matériau (10), fluide et durcissable, appliqué par le premier dispositif applicateur (20),
le dispositif (22), pour appliquer une couche (12) décorative, est formé par un deuxième dispositif applicateur (22), pour appliquer un matériau (12), fluide et durcissable, ou un dispositif d'impression.

11. Dispositif selon la revendication 10, présentant en outre au moins un deuxième dispositif (32), pour lisser et/ou former le matériau (12), fluide et durcissable, appliqué par le premier dispositif applicateur (22).

12. Dispositif selon l'une des revendications 10 à 11, présentant en outre au moins un dispositif de refroidissement, pour refroidir le matériau, fluide et durcissable, ayant été appliqué, de préférence intégré au au moins un premier (30) et/ou deuxième (32) dispositif pour lisser et/ou former.

13. Dispositif selon l'une des revendications 10 à 12, où le au moins un premier (20) et/ou deuxième (22) dispositif applicateur est formé par une extrudeuse.

14. Procédé ou dispositif selon l'une des revendications précédentes, **caractérisé en ce que** le matériau (10, 12) fluide et durcissable présente un ou plusieurs matériaux pris dans le groupe composé d'un matériau synthétique, d'un matériau synthétique mélangé, d'un matériau ligneux obtenu par extrusion et d'un matériau métallique et de préférence est injectable.
